Europäisches Patentamt

European Patent Office

Office européen des brevets

(19)

(11) Numéro de publication: **0 133 389**
**B1**

(12) **FASCICULE DE BREVET EUROPEEN**

(45) Date de publication du fascicule du brevet:
**09.03.88**

(21) Numéro de dépôt: **84401422.5**

(22) Date de dépôt: **04.07.84**

(51) Int. Cl.⁴: **F 16 D 55/224,** F 16 D 55/26,
F 16 D 55/02

(54) **Frein à disque à bras de renfort d'étrier amovible.**

(30) Priorité: **13.07.83 FR 8311664**

(43) Date de publication de la demande:
**20.02.85 Bulletin 85/8**

(45) Mention de la délivrance du brevet:
**09.03.88 Bulletin 88/10**

(84) Etats contractants désignés:
**DE GB IT NL SE**

(56) Documents cités:
**EP - A - 0 112 766**
**FR - A - 2 306 371**
**FR - A - 2 309 758**
**FR - A - 2 398 930**
**FR - A - 2 456 884**
**US - A - 3 602 328**
**US - A - 3 802 539**

(73) Titulaire: **BENDIX France, 126, rue de Stalingrad,
F-93700 Drancy (FR)**

(72) Inventeur: **Carre, Jean-Jacques, 59 bd de l'Est,
F-93340 Le Raincy (FR)**
Inventeur: **Meynier, Guy, 58 rue de Reims,
F-93600 Aulnay S/Bois (FR)**

(74) Mandataire: **Poidatz, Emmanuel et al, Division
Technique Service Brevets Bendix Europe 126, rue de
Stalingrad, F-93700 Drancy (FR)**

## Description

L'invention concerne les freins à disque, notamment pour vehicule automobile, et plus particulièrement les freins à disque du type comportant un étrier chevauchant un ensemble tournant à freiner, l'étrier étant formé par deux poutres placées de part et d'autre, axialement, de l'ensemble tournant et par deux bras circonférentiellement espacés passant par-dessus la périphérie de l'ensemble tournant et reliant entre elles les deux poutres, les deux bras et les deux poutres définissant une ouverture radiale de montage et de démontage d'éléments de friction susceptibles de coopérer avec l'ensemble tournant à freiner, et un troisième bras d'étrier, s'étendant au-dessus de l'ouverture et relié aux poutres.

Un frein de ce type est décrit dans le document US-A 3 602 328. Dans ce document, le troisième bras portant l'ouverture radiale est réalisé sous la forme d'une pièce réceptrice de couple à section polygonale formant surfaces de coulissement et d'ancrage pour les éléments de friction bloquée en compression entre les deux poutres par deux boulons vissés dans les extrémités du troisième bras qui doivent être retirés, pour permettre l'enlèvement du troisème bras puis des patins, avec les risques afférents de remontage incorrect de ces éléments, voire d'endommagement ou de perte du troisème bras.

La présente invention a pour objet de proposer un frein à disque du type considéré, de structure légère mais robuste et de mise en oeuvre simplifiée évitant les inconvénients sus-mentionnés.

A cet effet, l'invention propose un frein à disque du type sus-mentionné, dans lequel le troisième bras est monté à basculement, autour d'un axe, sur l'une des poutres, des moyens étant prévus pour lier rigidement le troisième bras à l'autre poutre de l'étrier.

Avec cet agencement convenant tout particulièrement pour les freins de poids lourds, il est possible d'extraire aisément radialement les éléments de friction par une action simple, rapide et sûre sur le troisième bras sans nécessiter le désassemblage de ce dernier.

Un autre objet de l'invention consiste à prévoir des moyens coopérants portés par l'étrier et le troisième bras pour lier rigidement ce dernier à l'étrier en permettant de rattraper aisément l'ensemble des tolérances de fabrication existant sur le frein de manière à positionner le troisième bras sans jeu par rapport aux deux poutres.

On décrira maintenant à titre d'exemple non limitatif deux modes de réalisation de l'invention en se référant aux figures annexées dans lesquelles:

– la fig. 1 est une vue en bout d'un frein à disque réalisé conformément à l'invention;
– la fig. 2 est une vue de dessus du frein de la fig. 1;
– la fig. 3 est une vue en coupe selon la ligne A–A de la fig. 1;
– la fig. 4 est une vue en bout d'un frein à disque réalisé conformément à l'invention selon un deuxième mode de réalisation;
– la fig. 5 est une vue de dessus du frein de la fig. 4;
– la fig. 6 est une vue partielle en coupe selon la ligne B–B de la fig. 4;
– la fig. 7 est une vue partielle en coupe selon la ligne C–C de la fig. 2;
– la fig. 8 est une vue partielle en coupe selon la ligne D–D de la fig. 2; et
– la fig. 9 est une vue, analogue à la figure 3, montrant un autre mode de réalisation de montage, avec rattrapage des tolérances de fabrication, du troisième bras sur les poutres de l'étrier.

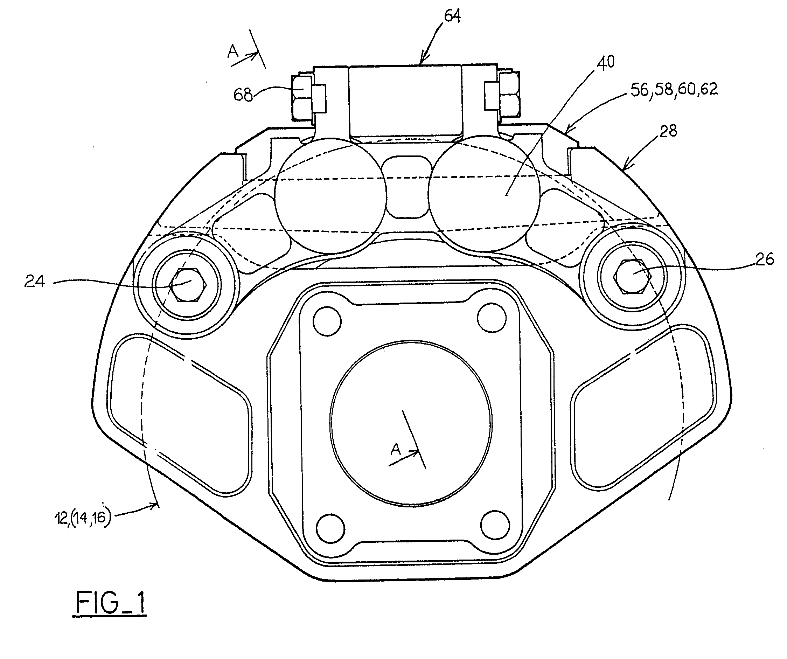

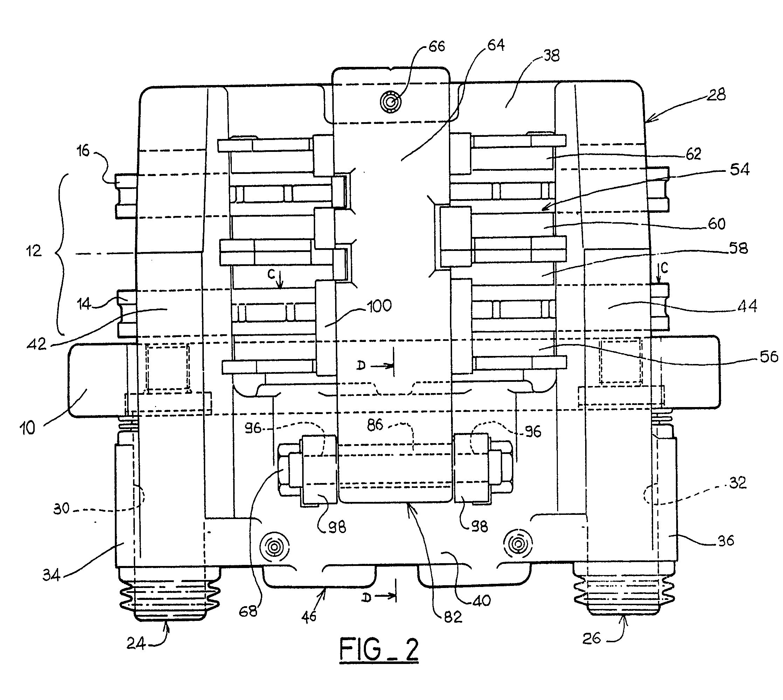

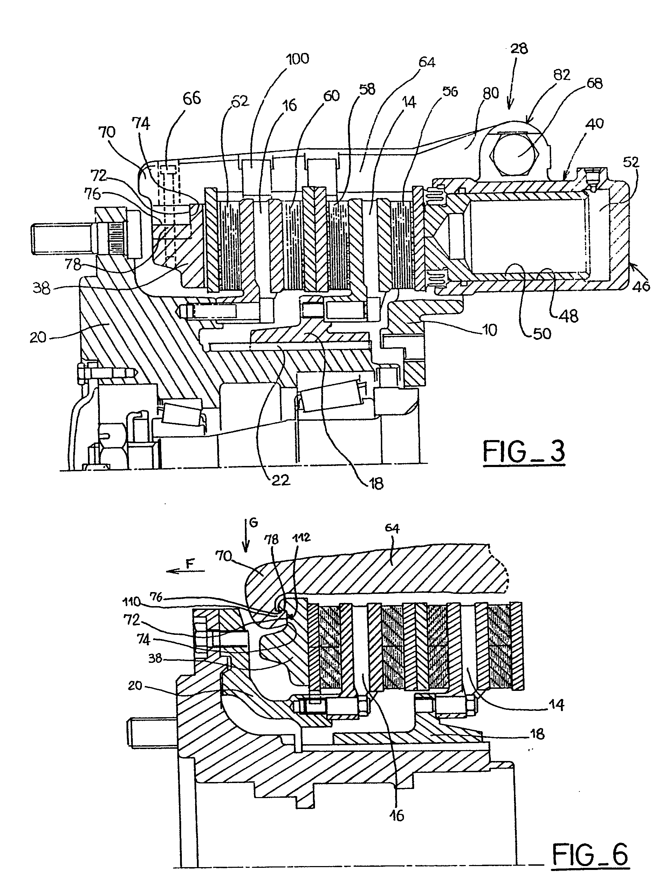

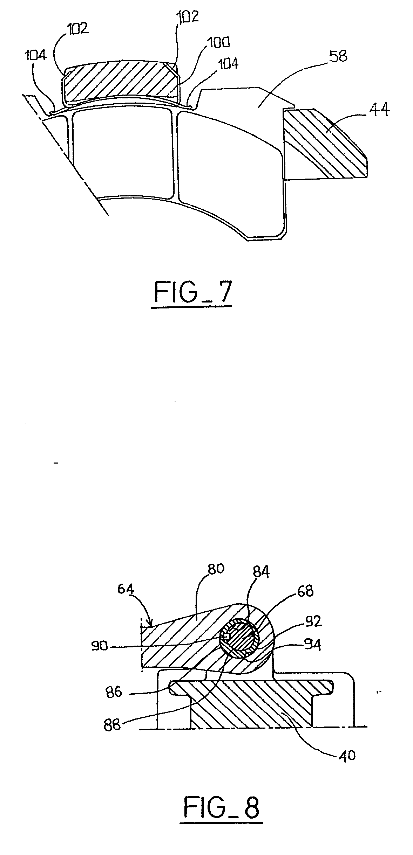

Le frein à disque représenté sur les figures 1 à 3 comporte un support fixe 10 prévu pour être associé à une partie fixe du véhicule (non représenté) et constitué, dans le mode de réalisation représenté, par une plaque disposée au voisinage d'un ensemble tournant 12 prévu pour être associé en rotation avec une roue du véhicule (non représentée). Dans le mode de réalisation des figures 1 à 3, l'ensemble tournant 12 est constitué par deux disques 14 et 16 associés respectivement à un moyeu coulissant 18 et un moyeu fixe 20 sur lequel coulisse axialement le moyeu 18 mais est solidaire de celui-ci en rotation au moyen d'un système de clavetage 22 prévu entre les deux moyeux 18 et 20. Le support fixe 10 reçoit en coulissement au moyen de deux colonnettes axiales circonférentiellement espacées 24 et 26 un étrier mobile 28 chevauchant l'ensemble tournant à freiner. Les axes des colonnettes 24 et 26 sont sensiblement parallèles à l'axe de rotation de l'ensemble tournant 12. Comme on le voit plus particulièrement sur la figure 2, les colonnettes 24 et 26 sont fixes par rapport au support 10 et passent dans des alésages 30 et 32 formés dans des bras 34 et 36, respectivement, de l'étrier 28. En se reportant à la figure 2, on voit que l'étrier 28 est constitué par deux poutres 38 et 40 placées de part et d'autre de l'ensemble tournant 12 et reliées par deux bras 42 et 44 circonférentiellement espacés et reliant les deux poutres 38 et 40. Dans le mode de réalisation représenté, l'étrier étant coulissant, la poutre 40 comporte un moteur de frein double 46 dont chaque partie comporte un alésage 48 dans lequel coulisse un piston 50 formant une chambre 52 susceptible d'être reliée à une source de pression telle qu'un maître cylindre (non représenté). Les deux poutres 38 et 40 ainsi que les deux bras 42 et 44 définissent dans l'étrier une ouverture radiale 54. Comme on le voit plus particulièrement sur les figures 2 et 3, l'ouverture radiale 54 permet un montage des éléments de friction 56, 58, 60 et 62 placés dans cet ordre de part et d'autre des disques 14 et 16. Les éléments de friction 56 à 62 sont reçus en ancrage et en coulissement sur les bras 42 et 44 comme représenté sur la figure 7.

Conformément à l'invention, l'étrier 28 comporte un troisième bras 64 placé au-dessus de l'ouverture 54, fixé rigidement sur les poutres 38 et 40 respectivement au moyen d'une vis 66 et d'un boulon 68. En se reportant à la figure 3, on voit que l'extrémité 70 du bras 64 comporte une surface radiale 72 en appui axial sur une surface radiale 74 prévue dans la poutre 38. De même, l'extrémité 70 comporte une surface tangentielle 76 en appui radial sur une surface tangentielle 78 prévue dans la poutre 38. La vis 66 et les surfaces 72 et 76 forment un dispositif d'accrochage du troisième bras 64 sur la poutre 38. En se reportant aux figures 3 et 8 on voit que le bras 64 porte à son extrémité 80 un dispositif réglable désigné dans son ensemble par la référence 82 et constitué, dans le mode de réalisation représenté, par un système excentrique formé par le boulon 68 qui comporte une partie cylindrique 84 sur laquelle est montée une douille 86 à alésage excentré 88, la douille 86 et le boulon 68 étant solidarisés en rotation au moyen d'une clavette 90 montée dans des rainures réalisées en vis à vis dans le boulon 68 et la douille 86. La douille 86 est montée par sa surface cylindrique extérieure 92 dans un alésage 94 formé dans l'extrémité 80 du bras 64, le boulon 68 étant monté par sa portion cylindrique dans les alésages 96 formés dans deux bras 98 solidaires de la poutre 40.

Le frein qui vient d'être décrit à l'aide des figures 1, 2, 3, 7 et 8 se monte de la façon suivante:

L'étrier 28, dépourvu de son troisième bras central 64, est préalablement monté sur le support fixe 10 en enjambant les deux disques 14 et 16. On procède alors au montage des éléments de friction. L'ouverture 54 permet un montage radial des éléments de friction selon la flèche E de la figure 7, l'élément de friction 56 étant placé entre le moteur de frein 46 et le premier disque 14. Les éléments de friction 58 et 60 sont ensuite placés, toujours au travers de l'ouverture 54, entre les deux disques 14 et 16. On monte alors le dernier élément de friction 62 entre le disque 16 et la poutre 38. On présente alors le bras 64, et plus précisément son extrémité 80 équipée de la douille 86 elle-même pourvue de la clavette 90, entre les bras 98 de la poutre 40. On procède alors au montage du boulon 68 en le faisant passer dans les alésages 96 des bras 98 en veillant à ce que la clavette 90 se positionne correctement dans la rainure du boulon 68. Lorsque le boulon est correctement monté, on procède au montage de son écrou sans serrer celui-ci. On bascule alors l'ensemble du bras 64 de manière à ce que la surface 76 portée par l'extrémité 70 vienne en appui sur la surface 78 de la poutre 38. En tournant la tête du boulon 68 on fait tourner la douille 86 qui par son excentricité vient appliquer la surface radiale 72 de l'extrémité 70 du bras 64 sur la surface radiale 74 portée par la poutre 38. Lorsque ce contact est obtenu un léger couple supplémentaire est appliqué sur l'excentrique de manière à assurer un bon placage des deux surfaces radiales. On procède alors au montage de la vis 66 qui verrouille en position l'extrémité 70 du bras 64 par rapport à la poutre 38. On bloque alors dans cette position l'extrémité 80 du bras 64 assurant ainsi la liaison rigide entre le troisième bras et la poutre 40; ceci est obtenu en serrant l'écrou du boulon 68 et en immobilisant en rotation l'ensemble boulon au moyen de freins d'écrou conventionnels.

Lorsque l'on veut procéder au démontage des éléments de friction, il suffit de desserrer le boulon 68, de déposer la vis 66, le bras 64 étant alors en mesure de basculer autour de l'excentrique par son alésage 92 autour de la portion cylindrique 94 de la douille 86, laissant ainsi accès aux éléments de friction 56 à 62.

En se reportant aux figures 2, 3 et 7 on voit que le bras 64 est pourvu d'un ressort de patin 100 solidaire du bras 64 au moyen de pattes rabattues 102, le ressort 100 comportant une deuxième série de pattes 104 sollicitant radialement vers l'intérieur les éléments de friction de manière à leur assurer un appui correct sur les bras 42 et 44. Il est clair que, lors de l'opération de montage du bras 64, le serrage de la vis 66 assure la précontrainte sur le ressort 100 et donc sur les éléments de friction.

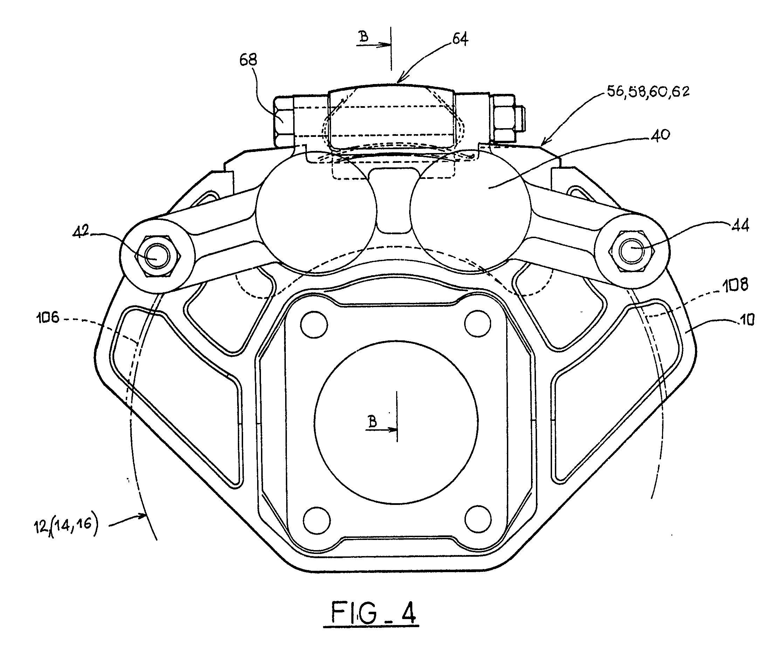

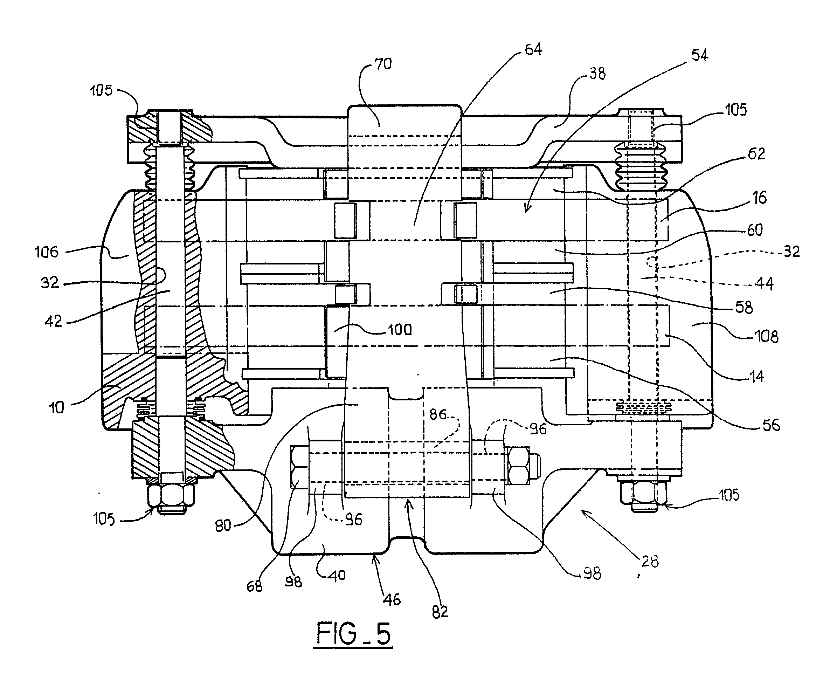

Le mode de réalisation représenté sur les figures 4, 5 et 6 est similaire au premier mode de réalisation. Les éléments remplissant les fonctions similaires porteront les mêmes numéros de référence. Dans ce second mode de réalisation, l'étrier 28 est formé par deux poutres 38 et 40 reliées entre elles par des bras 42 et 44 formés par des tiges filetées boulonnées d'une part sur la poutre 38 et d'autre part sur la poutre 40 au moyen de liaisons filetées 105. Ces bras 42 et 44 traversent des alésages 32 formés dans des portions 106 et 108 du support fixe 10 passant par-dessus la périphérie des disques 14 et 16. Les éléments de friction 56, 58, 60, et 62 sont reçus en ancrage et en coulissement sur les portions 106 et 108 d'une manière similaire à celle représentée sur la figure 7. Les disques 14 et 16 avec leurs moyeux 18 et 20 forment l'ensemble tournant à freiner 12.

Conformément à l'invention, le frein du deuxième mode de réalisation comporte un troisième bras 64 passant par-dessus l'ouverture 54 et liant rigidement les deux poutres 38 et 40. En se reportant à la figure 6, on voit que l'extrémité 70 de la poutre 64 comporte un dispositif d'accrochage formé par une portion en saillie 110 qui pénètre dans une découpe 112 formée dans la poutre 38. La saillie 110 et la découpe 112 comportent chacune deux surfaces orthogonales, une radiale et une tangentielle, coopérant respectivement les unes avec les autres. l'autre extrémité 80 de la poutre 64 comporte un dispositif réglable 82 à excentrique similaire à celui représenté sur la figure 8. De même, le bras 64 est pourvu d'un ressort 100 destiné à plaquer radialement les éléments de friction sur les portions 106 et 108 d'une manière identique à celle représentée sur la figure 7.

Le frein qui vient d'être décrit à l'aide des figures 4, 5 et 6 ainsi que des figures 7 et 8 se monte de la manière suivante:

L'étrier 28 dépourvu de son bras 64 est préalablement assemblé sur le support fixe 10. Pour cela la poutre 38 est préalablement équipée des bras 42 et 44 au moyen de liaisons filetées 105 et pourvue des soufflets de protection de coulissement. Les bras 42 et 44 sont alors montés dans les alésages 32 formés dans les portions 106 et 108 du support fixe 10. On procède alors au montage des deux autres soufflets de protection et on monte sur les bras 42 et 44 la poutre 40 portant les moteurs de frein 46. L'ensemble est serré au moyen d'écrous montés sur les portions filetées 105 d'extrémité des bras 42 et 44. On procède alors au montage des éléments de friction 56 à 62 en les présentant radialement selon la flèche E de la figure 7. Lorsque les éléments de friction sont en appui sur les portions 106 et 108 du support fixe 10, et correctement placés par rapport aux disques 14 et 16, on procède au montage du bras 64. Pour cela, d'une manière identique au premier mode de réalisation, le bras 64 est préalablement équipé de la douille 86, elle-même pourvue de la clavette 90. On présente alors le boulon 68 en veillant à ce que sa rainure coopère correctement avec la clavette 90, la partie cylindrique du boulon passant dans les alésages 96 des bras 98 formés sur la poutre 40. On procède au montage de l'écrou du boulon 68 sans serrer celui-ci. On rapproche alors l'extrémité 70 du bras 64 de la poutre 38. En tournant l'excentrique au moyen du boulon 68 on déplace le bras 64 et plus particulièrement son extrémité 70 dans le sens de la flèche F de la figure 6 de manière à ce que sa saillie 110 puisse se présenter devant la découpe 112 de la poutre 38. On rabat alors la portion 70 selon la flèche G de la figure 6 et on tourne l'excentrique en sens inverse de manière à ramener l'extrémité 70 du bras 64 dans le sens contraire à la flèche F lui permettant ainsi de pénétrer dans la découpe 112 de manière à ce que les surfaces radiales et tangentielles de l'extrémité 70 et de la poutre 38 coopèrent comme représenté sur la figure 6. Une rotation complémentaire du boulon 68 assure une solidarisation correcte du bras 64 et de la poutre 38. Après serrage de l'écrou, le boulon et l'écrou 68 sont immobilisés en rotation d'une façon conventionnelle.

Le démontage du bras 64 s'effectue d'une manière inverse à l'ordre qui vient d'être décrit.

De même que pour le premier mode de réalisation, le ressort des patins 100 est mis en précontrainte lorsque le bras 64 est déplacé dans le sens de la flèche G de la figure 6 avant serrage du boulon 68.

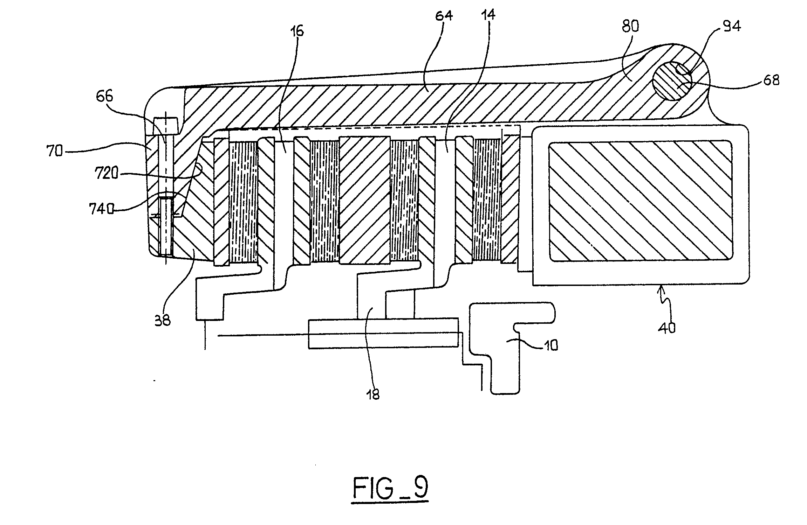

On a représenté sur la figure 9 un autre système de rattrapage de jeu, ne recourant pas à un excentrique, et applicable au mode de réalisation décrit précédemment en relation avec les figures 1 à 3. L'extrémité intérieure 80 du troisième bras 64 est ici montée à pivotement directement sur le boulon 68 (éventuellement avec interposition d'une douille coaxiale) et l'extrémité extérieure 70 du troisième bras comporte une surface d'appui intérieure 720 s'étendant suivant un angle inférieur à 90° – par exemple 80° – par rapport à l'axe de l'ensemble tournant à freiner, et coopérant (éventuellement avec interposition d'un coin) avec une surface de rampe correspondante 740 dirigée vers l'extérieur et formée dans la poutre extérieure 38 de l'étrier, ces deux surfaces étant plaquées en appui l'une contre l'autre par la vis radiale 66 comme dans le mode de réalisation des figures 1 à 3, un serrage légèrement en excès de la vis 66 permettant d'exercer une précontrainte axiale sur la structure d'étrier.

De la description qui précède, on voit que l'invention permet un renfort des deux poutres et ceci quelles que soient les tolérances de fabrication des différents composants. On voit également que l'invention permet un renfort efficace quelle que soit la dimension de l'ouverture destinée à l'extraction des éléments de friction et quel que soit le nombre de disques formant l'ensemble tournant à freiner. L'extraction des éléments de friction ne nécessite pas la dépose de l'étrier, qui peut être pesant dans le cas d'un multidisque destiné aux véhicules poids lourds, seul le basculement du bras central est nécessaire.

L'invention n'est pas limitée aus modes de réalisation représentés et des modifications peuvent y être apportées sans sortir du cadre de la présente invention; en particulier le moteur de frein 46 peut être simple ou double et peut être rapporté sur la poutre 40 et non réalisé monobloc comme représenté. De même, le mode d'accrochage des éléments de friction ou le mode d'accrochage du bras 64 sur la poutre 38 peuvent être modifiés sans sortir pour cela du cadre de l'invention. Enfin, le troisième bras peut également être monté à basculement sur la poutre extérieure 38 et verrouillé sur la poutre intérieure 40.

## Revendications

1. Frein à disque, du type comportant un étrier (28) chevauchant un ensemble tournant (12) à freiner, l'étrier (28) étant formé par deux poutres (38, 40) placées de part et d'autre, axialement, de l'ensemble tournant (12) et par deux bras (42, 44) circonférentiellement espacés passant par-dessus la périphérie de l'ensemble tournant (12) et reliant entre elles les deux poutres (38, 40), les deux bras (42, 44) et les deux poutres (38, 40) définissant une ouverture radiale (54) de montage et de démontage d'éléments de friction (56, 58, 60, 62) susceptibles de coopérer avec l'ensemble tournant (12) à freiner, et un troisième bras d'étrier (64), s'étendant au-dessus de l'ouverture (54) et relié aux poutres, caractérisé en ce que le troisième bras (64) est articulé autour d'un axe (68) sur l'une (40) des poutres, des moyens (66, 76, 78, 86) étant prévus pour lier rigidement le troisième bras (64) à l'autre (38) poutre.

2. Frein à disque selon la revendication 1, caractérisé en ce qu'il comporte des moyens coopérants (86, 94; 720, 740) portés par l'étrier (28) et le troisième bras (64) pour lier rigidement le troisième bras (64) sans jeu aux deux poutres (38, 40).

3. Frein à disque selon l'une des revendications précédentes, caractérisé en ce que le troisième bras (64) comporte, à son extrémité (70) opposée à l'axe de basculement (68), un dispositif d'accrochage déverrouillable (110, 112; 66) liant rigidement ledit troisième bras à l'autre (38) poutre.

4. Frein à disque selon la revendication 2 ou la revendication 3, caractérisé en ce qu'il comprend un système à excentrique (86, 90) coaxial à l'axe (68) de basculement du troisième bras (64).

5. Frein à disque selon la revendication 3 et la revendication 4, caractérisé en ce que le dispositif d'accrochage comprend une saillie (110) du troisième bras (64) présentant une surface radiale (72) coopérant axialement avec une surface radiale (74) d'une découpe (112) formée dans l'autre (38) poutre lorsque le système à excentrique est mis en oeuvre, et présentant une surface tangentielle (76) coopérant avec une surface tangentielle (78) de la découpe (112) pour éviter un échappement radial de ladite extrémité (70) du troisième bras.

6. Frein à disque selon la revendication 3, caractérisé en ce que ladite extrémité (70) du troisième bras (64) comporte une surface d'appui (76; 720) coopérant avec une surface correspondante (78; 740) de l'autre (38) poutre, ces deux surfaces étant maintenues en appui l'une contre l'autre par un système fileté (66).

7. Frein à disque selon la revendication 6, caractérisé en ce que lesdites surfaces d'appui (720, 740) forment des pentes de rattrapage de jeu entre le troisième bras (64) et l'étrier (28).

8. Frein à disque selon l'une des revendications précédentes, caractérisé en ce que le troisième bras (64) porte un ressort de patin (100) sollicitant radialement vers l'intérieur les éléments de friction (56, 58, 60, 62) vers des bras ou portions d'ancrage et de coulissement (42, 44, 106, 108) lorsque le troisième bras (64) occupe sa position normale de fonctionnement.

9. Frein à disque selon l'une des revendications 4 et 5, caractérisé en ce que le système à excentrique (68, 86, 90) est formé par un boulon (68) comportant une portion cylindrique (84) coopérant avec au moins un alésage (96) formé dans l'une (40) des deux poutres, ladite portion cylindrique (84) comportant une rainure recevant une clavette (90) pour solidariser en rotation une douille cylindrique (86) comportant une rainure sur un alésage excentré (88), la douille (86) coopérant par sa surface cylindrique extérieure avec un alésage (94) formé dans le troisième bras (64).

10. Frein à disque selon l'une des revendications précédentes, caractérisé en ce que les deux premiers bras (42, 44) et les deux poutres (38, 40) sont formés d'une même pièce monobloc.

11. Frein à disque selon l'une des revendications 1 à 9, caractérisé en ce que les deux premiers bras (42, 44) et les deux poutres (38, 40) sont formés par des éléments distincts assemblés par des liaisons filetées (105).

12. Frein à disque selon l'une des revendications précédentes, caractérisé en ce que l'étrier (28) est coulissant sur un support fixe (10), l'une (40) des deux poutres (38, 40) comportant un moteur de frein (46) appliquant directement un élément de friction (56) sur une face de l'ensemble tournant (12) et, par réaction au travers de l'étrier coulissant (28), l'autre (38) desdites poutres appliquant un autre élément de friction (62) sur l'autre face de l'ensemble tournant (12) à freiner.

**Patentansprüche**

1. Scheibenbremse mit einem Bremssattel (28), der sich über eine abzubremsende Bremsscheibenanordnung (12) erstreckt, wobei der Bremssattel (28) von zwei Schenkeln (38, 40) und zwei Armen (22, 44) gebildet wird, von denen die beiden Schenkel axial beidseitig zu der Bremsscheibenanordnung (12) liegen und die beiden Arme in Umfangsrichtung beabstandet sind, wobei sie sich über den Umfang der Bremsscheibenanordnung (12) erstrecken und die beiden Schenkel (38, 40) miteinander verbinden, wobei die beiden Arme (42, 44) und die beiden Schenkel (38, 40) eine radiale Öffnung (54) zum Ein- und Ausbau von Reibbacken (56, 58, 60, 62) bilden, die mit der abzubremsenden Bremsscheibenanordnung (12) zusammenwirken, und einem dritten Arm (64) des Bremssattels, der sich die über Öffnung (54) erstreckt und mit den Schenkeln verbunden ist, dadurch gekennzeichnet, dass der dritte Arm (64) an einem (40) der Schenkel um eine Achse (68) angelenkt ist, wobei Mittel (66, 76, 78, 86) vorgesehen sind, um den dritten Arm (64) mit dem anderen Schenkel (38) starr zu verbinden.

2. Scheibenbremse nach Anspruch 1, dadurch gekennzeichnet, dass sie zusammenwirkende Mittel (86, 94; 720, 740) aufweist, die von dem Bremssattel (28) und dem dritten Arm (64) getragen werden, um den dritten Arm (64) spielfrei mit den beiden Schenkeln (38, 40) starr zu verbinden.

3. Scheibenbremse nach einem der vorhergehenden Ansprüche, dadurch gekennzeichnet, dass der dritte Arm (64) an seinem der Schwenkachse (68) gegenüberliegendem Ende (70) eine lösbare Verriegelungsvorrichtung (110, 112; 66) aufweist, die den dritten Arm mit dem anderen Schenkel (38) starr verbindet.

4. Scheibenbremse nach Anspruch 2 oder 3, dadurch gekennzeichnet, dass sie ein zur Schwenkachse (68) des dritten Armes (64) koaxiales Exzentersystem (86, 90) aufweist.

5. Scheibenbremse nach Anspruch 3 und 4, dadurch gekennzeichnet, dass die Verriegelungsvorrichtung einen Vorsprung (110) am dritten Arm (64) aufweist, der eine Radialfläche (72) und eine Tangentialfläche (76) aufweist, von denen die radiale Fläche axial mit einer Radialfläche (74) einer Ausnehmung (112) in dem anderen Schenkel (38) zusammenwirkt, wenn das Exzentersystem betätigt wird, und die Tangentialfläche (76) mit einer Tangentialfläche (78) der Ausnehmung (112) zusammenwirken, um ein radiales Entweichen des besagten Endes (70) des dritten Armes zu vermeiden.

6. Scheibenbremse nach Anspruch 3, dadurch gekennzeichnet, dass das Ende (70) des dritten Armes (64) eine Anschlagfläche (76; 720) aufweist, die mit einer entsprechenden Fläche (78;

740) des anderen Schenkels (38) zusammenwirkt, wobei die beiden Flächen durch ein Gewindesystem (66) miteinander in Anlage gehalten werden.

7. Scheibenbremse nach Anspruch 6, dadurch gekennzeichnet, dass die Anschlagflächen (720, 740) Rampen zum Spielausgleich zwischen dem dritten Arm (64) und dem Bremssattel (28) bilden.

8. Scheibenbremse nach einem der vorhergehenden Ansprüche, dadurch gekennzeichnet, dass der dritte Arm (64) eine Bremsbackenfeder (100) aufweist, die die Bremsbacken (56, 58, 60, 62) radial nach innen gegen Verankerungs- und Gleitarme bzw. -abschnitte (42, 44, 106, 108) drükken, wenn der dritte Arm (64) seine normale Betriebsstellung einnimmt.

9. Scheibenbremse nach Anspruch 4 oder 5, dadurch gekennzeichnet, dass das Exzentersystem (68, 86, 90) von einem Bolzen (68) mit einem zylindrischen Abschnitt (84) gebildet wird, der mit mindestens einer Bohrung (96) in einem (40) der beiden Schenkel zusammenwirkt, wobei der zylindrische Abschnitt (84) eine Nut aufweist, in der sich ein Keil (90) befindet, um eine zylindrische Hülse (86) gegen Drehen zu sichern, die eine Nut an einer exzentrischen Bohrung (88) aufweist, wobei die Hülse (86) an ihrer zylindrischen Aussenfläche mit einer Bohrung (94) im dritten Arm (64) zusammenwirkt.

10. Scheibenbremse nach einem der vorhergehenden Ansprüche, dadurch gekennzeichnet, dass die beiden Arme (42, 44) und die beiden Schenkel (38, 40) von einem einstückigen Teil gebildet werden.

11. Scheibenbremse nach einem der Ansprüche 1 bis 9, dadurch gekennzeichnet, dass die beiden Arme (42, 44) und die beiden Schenkel (38, 40) von getrennten Teilen gebildet sind, die durch Gewindeverbindungen (105) zusammengebaut sind.

12. Scheibenbremse nach einem der vorhergehenden Ansprüche, dadurch gekennzeichnet, dass der Bremssattel (28) an einem Bremsträger (10) gleitend gelagert ist, wobei einer (40) der beiden Schenkel (38, 40) einen Bremsmotor (46) aufweist, der eine Bremsbacke (46) unmittelbar gegen eine Seite der Bremsscheibenanordnung (12) andrückt, während der andere (38) der Schenkel durch Reaktion über den schwimmenden Bremssattel (28) eine andere Bremsbacke (22) gegen die andere Seite der abzubremsenden Bremsscheibenanordnung (12) andrückt.

## Claims

1. Disc brake, of the type incorporating a caliper (28) astride a rotating assembly (12) to be braked, the caliper (28) being formed by two beams (38, 40) positioned on each side, axially, of the rotating assembly (12) and by two circumferentially spaced arms (42, 44) passing over the periphery of the rotating assembly (12) and joining the two beams (38, 40) to one another, the two arms (42, 44) and the two beams (38, 40) defining a radial opening (54) for mounting and removing friction components (56, 58, 60, 62) capable of cooperating with the rotating assembly (12) to be braked, and a third caliper arm (64), extending above the opening (54) and connected to the beams, characterized in that the third arm (64) is articulated about a shaft (68) on one (40) of the beams, means (66, 76, 78, 86) being provided for rigidly joining the third arm (64) to the other (38) beam.

2. Disc brake according to Claim 1, characterized in that it incorporates cooperating means (86, 94; 720, 740) carried by the caliper (28) and the third arm (64) for rigidly joining the third arm (64), without play, to the two beams (38, 40).

3. Disc brake according to one of the preceding claims, characterized in that the third arm (64) incorporates, at its end (70) opposite the hinge shaft (68), an unlockable hooking device (110, 112; 66) rigidly joining the said third arm to the other (38) beam.

4. Disc brake according to Claim 2 or Claim 3, characterized in that it incorporates a system having an eccentric (86, 90) coaxial with the hinge shaft (68) of the third arm (64).

5. Disc brake according to Claim 3 and Claim 4, characterized in that the hooking device incorporates a projection (110) of the third arm (64) having a radial surface (72) cooperating axially with a radial surface (74) of a depression (112) formed in the other (38) beam when the eccentric system is operated, and having a tangential surface (76) cooperating with a tangential surface (78) of the depression (112) so as to prevent radial displacement of the said end (70) of the third arm.

6. Disc brake according to Claim 3, characterized in that the said end (70) of the third arm (64) incorporates a bearing surface (76; 720) cooperating with a corresponding surface (78; 740) of the other (38) beam, these two surfaces being held so as to bear against one another by a threaded system (66).

7. Disc brake according to Claim 6, characterized in that the said bearing surfaces (720, 740) form slopes for recovering play between the third arm (64) and the caliper (28).

8. Disc brake according to one of the preceding claims, characterized in that the third arm (64) carries a pad spring (100) pushing the friction components (56, 58, 60, 62) radially inwards towards arms or portions for anchoring and sliding (42, 44, 106, 108) when the third arm (64) occupies its normal working position.

9. Disc brake according to either of Claims 4 and 5, characterized in that the eccentric system (68, 86, 90) is formed by a bolt (68) incorporating a cylindrical portion (84) cooperating with at least one bore (96) formed in one (40) of the two beams, the said cylindrical portion (84) incorporating a groove housing a key (90) for fixing firmly in rotation a cylindrical bush (86) incorporating a groove in an eccentric bore (88), the bush (86) cooperating by its outer cylindrical surface with a bore (94) formed in the third arm (64).

10. Disc brake according to one of the preceding claims, characterized in that the two first arms (42, 44) and the two beams (38, 40) are formed from a single piece.

11. Disc brake according to one of Claims 1 to 9, characterized in that the two first arms (42, 44) and the two beams (38, 40) are formed by separate components assembled together by threaded fixings (105).

12. Disc brake according to one of the preceding claims, characterized in that the caliper (28) slides on a fixed support (10), one (40) of the two beams (38, 40) incorporating a brake actuator (46) applying a friction component (56) directly against a surface of the rotating assembly (12), and by reaction through the sliding caliper (28), the other (38) of the said beams applying another friction component (62) against the other surface of the rotating assembly (12) to be braked.

FIG_1

64

A

68

56,58,60,62

40

28

24

26

12,(14,16)

A

A

0133389

FIG_2

FIG_3

FIG_6

FIG _ 4

0 133 389

FIG _ 5

FIG_7

FIG_8

FIG_9